# EUROPEAN PATENT SPECIFICATION

(11) **EP 2 742 787 B1**
(45) Date of publication and mention of the grant of the patent: **03.02.2016**
(21) Application number: 13193607.2
(22) Date of filing: 20.11.2013
(51) Int. Cl.: A01B 63/24, A01B 73/00, A01C 7/20, A01B 63/00

(54) **Frame for a cereal seeder and cereal seeder that includes said frame**
Rahmen für eine Getreidesämaschine und Getreidesämaschine umfassend diesen Rahmen
Cadre pour un semoir de céréales et semoir qui comprend ledit cadre

(30) Priority: 11.12.2012 ES 201231922
(43) Date of publication of application: 18.06.2014
(73) Proprietor: Maquinaria Agricola Solà, S.L., 08280 Calaf (ES)
(72) Inventor: Meneses Pinacho, Juan Teodoro, 08280 Calaf (ES)
(74) Representative: Oficina Ponti, SLP

(56) References cited:
- EP-A1- 1 514 465
- EP-A1- 2 526 753
- DE-A1- 3 627 801
- DE-A1- 3 938 998
- DE-A1- 4 303 101

## Description

The present invention relates to a frame for a cereal seeder of the type of those where the seeds are distributed from the hopper to the furrow by gravity and to a cereal seeder including said frame which makes it possible to modify the working width of the machine at the same time guaranteeing a suitable width for road transport.

### Background of the invention

The market demands increasingly wide seeders and with the possibility of sowing a larger number of sowing lines or rows in one run. However, road transport requirements limit the machine's width in the transport position to a maximum of three metres.

Seeders are known wherein the seeds are distributed to the furrow by gravity. These seeders are suitable for the sowing of seeds of cereals at a steady "flow" and for this have plastic tubes that channel the seeds from the dispensing hopper to each one of the sowing elements provided in the frame chassis.

Said cereal seeders have numerous advantages with respect to another type of seeders that use pneumatic seed distribution systems. For example, the gravity distribution system is less complex than the pneumatic and requires less energy consumption and less maintenance. Furthermore, the gravity distribution system reduces seed blockages and facilitates visual control of the seed. Document DE3627801 discloses one of these existing cereal seeders.

However, the existing cereal seeders as the one disclosed in document DE3627801 have the drawback that their working width is limited to the road transport width, since the cereal sowing requires a greatly reduced distance between sowing elements which leaves very little margin for the application of chassis folding and unfolding systems used in another type of seeders designed for "single grain" sowing.

In particular, it has been observed that, in the cereal seeders, the distance between sowing elements of a same chassis is too reduced to allow the extended sowing elements to be retracted within the maximum three metres width for transport. On the other hand, it has been observed that a possible expansion of the number of sowing elements entails seed transport problems, since the gravity distribution system is not as efficient as the pneumatic.

### Description of the invention

The objective of the present invention is to resolve said drawbacks mentioned, developing a frame for a cereal seeder which allows expanding the working width of said seeder.

In accordance with this objective, according to a first aspect the present invention provides a frame for a cereal seeder of the type of those where the seeds are distributed from the hopper to the furrow by gravity, comprising a chassis provided with a plurality of sowing elements of said seeder, said chassis comprising a plurality of support arms of said sowing elements, said support arms being disposed substantially parallel in a same horizontal plane, the sowing elements of said support arms determining the sowing lines of said seeder, and it is characterized in that said arms comprising at least one telescopic portion susceptible of being horizontally extended from a transport position to an expanded working position and in that said frame includes at least one fluid-dynamic cylinder to actuate said telescopic portion.

The frame of the present invention has the advantage that it makes it possible to modify the working width "A" of the machine (greater number of sowing rows per run), at the same time guaranteeing a transport width "D" not greater than three metres.

Indeed, as the sowing elements are disposed distributed in several support arms and said arms have an extendable portion, it is possible to gain distance between the sowing elements of a same arm to allow the folding of an extendable portion within the maximum transport width of three metres.

In this way, a seeder is obtained of those that allow sowing cereal with the required distance "d" between sowing lines or rows, being possible to acquire tat the same time a working width "A" equal or greater than four metres in the extended position of said frame, or a width "D" of three metres for transport (folded position of the frame).

According to a preferred embodiment, said chassis comprises at least four support arms of said sowing elements disposed substantially parallel in a same horizontal plane, each one of said four arms including at least one portion susceptible of being horizontally extended.

Preferably, according to the same preferred embodiment, said frame comprises at least two chassis which are disposed longitudinally aligned, the free end of the arms of each one of said two chassis including at least one portion susceptible of being horizontally extended. Each one of said chassis comprises at least four support arms of the sowing elements disposed substantially parallel in a same plane.

It has been observed that, with these two chassis being disposed aligned, the frame better adapts to the irregularities of the land where the sowing is carried out.

Again advantageously, the extended portions of said chassis are configured to determine in an extended position a working width "A" equal to or greater than 4 m. This working width makes it possible to include between 23 and 25 sowing elements varying the distance "d" between sowing rows.

According to the same preferred embodiment, said frame comprises first seed dispensing means disposed to feed the arms of the front part of said chassis and second seed dispensing means disposed to feed the arms of the rear part of the same chassis.

In this way, it has been observed that they avoid possible transport problems of the seeds produced by expanding the working width of the seeder.

Preferably, said first dispensing means are associated to a first seed dispensing hopper of said seeder and said second dispensing means are associated to a second seed dispensing hopper of the same seeder, and advantageously, each one of said first or second dispensing means include a nozzle bar and tubes for the falling of the seeds from the nozzles of said bar to the sowing elements of the arms.

According to the same preferred embodiment, the chassis of the frame is articulately joined to a subframe through a parallelogram mechanism comprising a first connecting rod joined by one end to said subframe and by its other end to an arm of the front part of said chassis and a second connecting rod joined by one end to said same subframe and by its other end to an arm of the rear part of said chassis.

According to the preferred embodiment of the invention comprising two aligned chassis, said frame comprising two parallelogram mechanisms for each one of said chassis.
Preferably, said frame comprises means to regulate the height of said chassis, said regulation means including a worm provided on a tie rod which is articulately joined to said chassis.

Thanks to said parallelogram mechanisms and to the height regulation worm, a floating chassis is obtained which allows a very precise control of the sowing depth.

In accordance with a second aspect, the present invention provides a cereal seeder of the type of those where the seeds are distributed to the furrow by gravity, which is characterized in that it includes a frame such as that claimed.

The seeder of the present invention has the advantage that it has a highly expanded working width, and is, in turn, of very light construction, so that it can be transported by a tractor with little power, unlike what happens with pneumatic seeders.

Preferably, said seeder comprises at least one seed dispensing hopper the length of which is substantially equal to the length of said chassis or set of two chassis in their folded transport position.

In this way, the seed can be efficiently distributed to all the sowing elements in the extended working position of the frame.

Advantageously, said seeder comprises two seed dispensing hoppers each associated to seed dispensing means of said frame and, preferably, the rotation shafts of the dispensing means of said two hoppers are actuated by a same drive chain which is linked to the drive mechanism of a wheel of said seeder.

### Brief description of the figures

For a better understanding of all that disclosed, drawings are attached wherein, diagrammatically and only as a non-limitative example, a practical embodiment is represented.

In these drawings,
Figure 1 is a perspective view of a preferred embodiment of the chassis of the present invention including four support arms of sowing elements, in an extended working position.
Figure 2 is a plan view of the frame of figure 1 in an extended working position. In this figure 2 the seed dispensing means of the front and rear arms have been represented.
Figure 3 is a front view of the frame represented in figure 2, wherein the working width is observed.
Figure 4 is a side view of the same frame represented in figure 2.
Figure 5 is a front view of the frame represented in figure 2 but in the folded transport position.
Figure 6 is a sectional view of a cereal seeder provided with the frame of the embodiment of figure 1 and of two dispensing hoppers.
Figure 7 shows a detail of figure 6 wherein the height control worm of the frame can be observed.

### Description of a preferred embodiment

Below, a preferred embodiment is described of a frame of the present invention making reference to said figures.

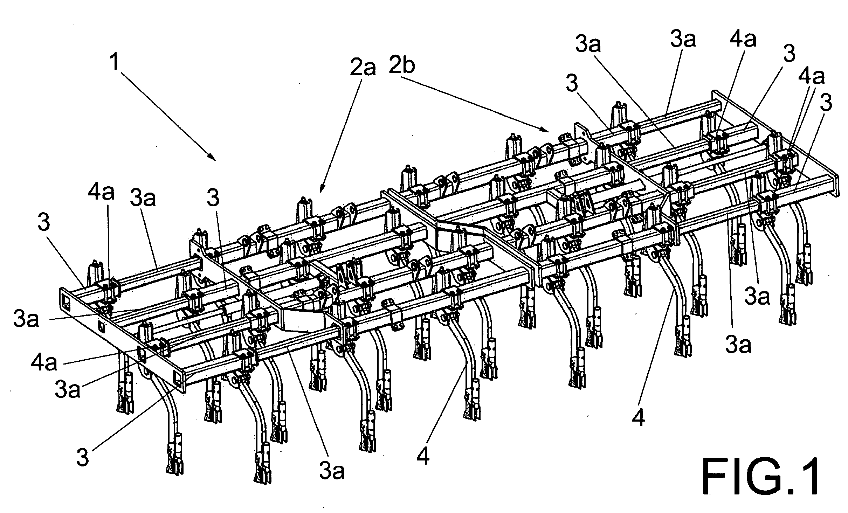

Figure 1 shows an embodiment of the chassis including two longitudinally aligned chassis 2a, 2b which are each provided with four support arms 3 of the sowing elements 4.

As can be seen in figure 1, the support arms 3 of the two chassis 2a, 2b are disposed substantially parallel in a same horizontal plane and each have a telescopic portion 3a at their free ends susceptible of being horizontally extended by the action of fluid-dynamic cylinders 5 of the chassis..

In the working position of the chassis shown by figures 1 to 3, the telescopic portions 3a are extended so that the sowing elements 4a situated in said portions 3a are displaced acquiring the desired working width "A". In this extended position, the seeds are distributed to the sowing elements 4a thanks to conduits 6 which channel the seeds from nozzles 7 situated in nozzle bars 8 associated to two seed distribution hoppers 9. One of said hoppers 9a feeds the sowing elements 4 of the arms 3 of the front part of the frame 1 and the other hopper 9b feeds the sowing elements 4 of the rear part.

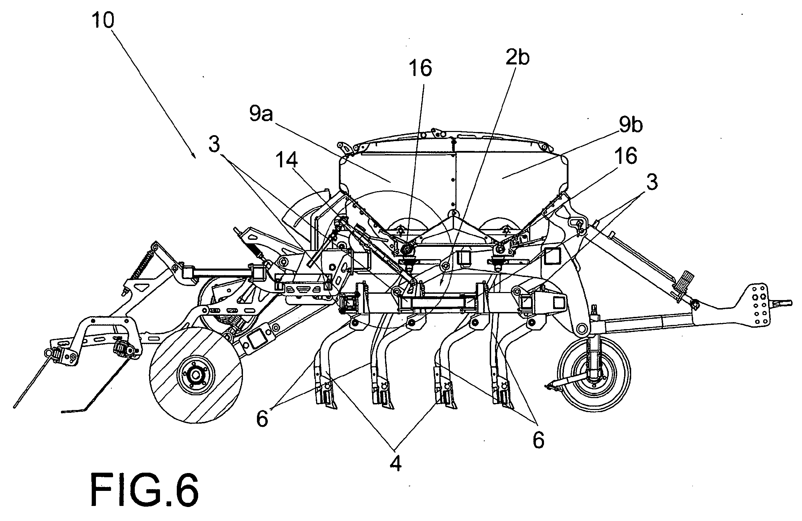

Figure 6 shows a side view of a seeder 10 including the frame 1 of figure 1. In this figure 6 the two seed dispensing hoppers 9a, 9b associated to the nozzle bars 8 can be observed, which are each disposed just below the rotation shaft 16 of the dispensing means of the two hoppers 9a,9b. The shafts 16 of each hopper 9a, 9b are actuated by the same drive chain (not represented) which are linked to the wheel drive mechanism of said seeder 10.

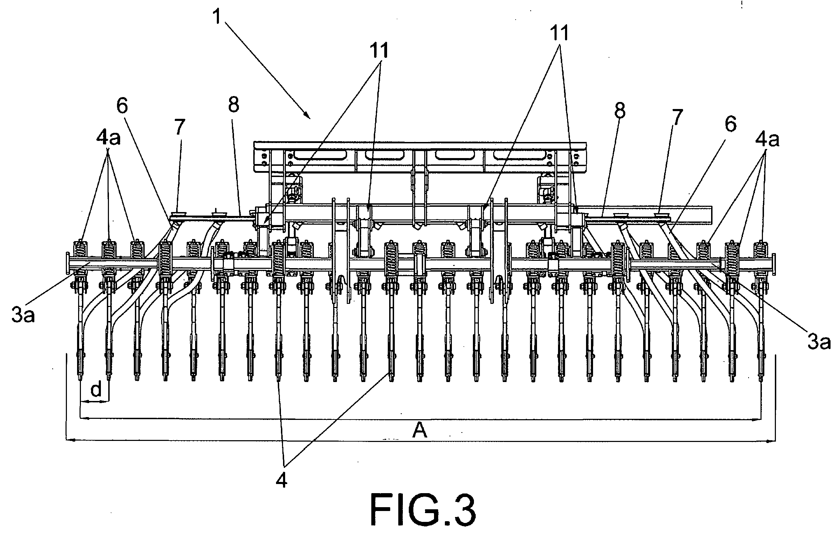

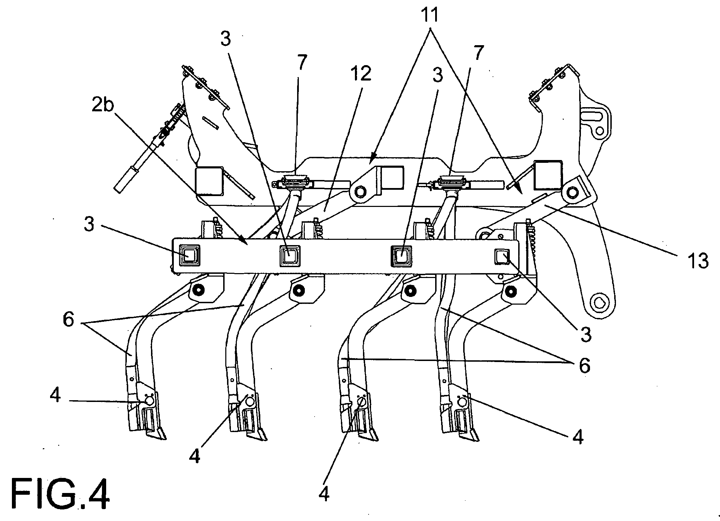

Figures 3 and 4 show in detail the length of the two nozzle bars 8 associated to the hoppers 9a, 9b, as well as the seed conduits 6 to the sowing elements 4a of the unfolding portions 3a of the arms 3. Figure 3 shows the working width acquired by the frame 1 provided with 25 sowing elements 4 with a distance "d" between rows of 160 mm which is suitable for the sowing of cereal.

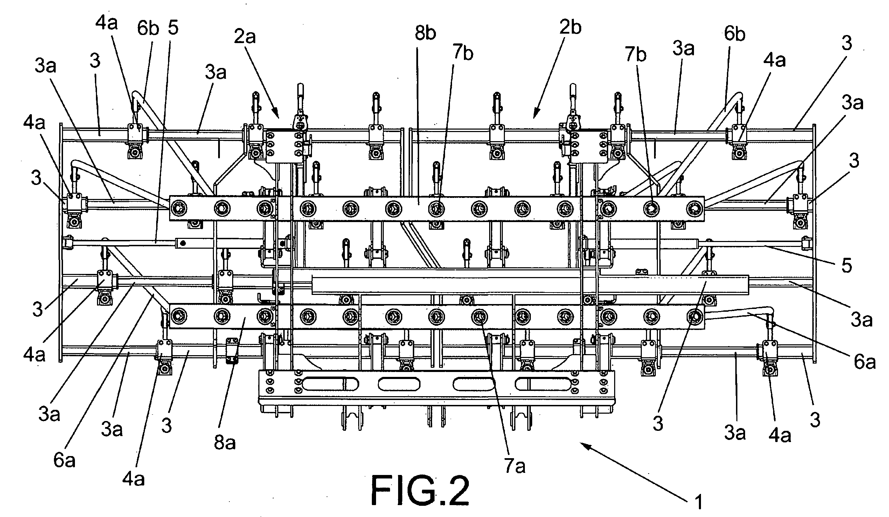

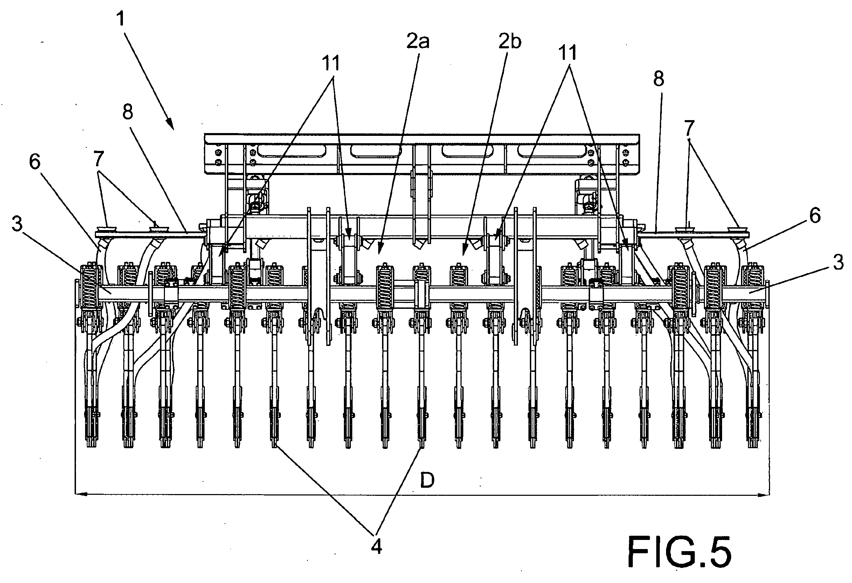

As can be seen in figure 2, the 25 sowing elements 4 are disposed distributed in the support arms 3 of the two chassis 2a,2b so that the sowing elements 4 of a same arm 3 keep the sufficient distance to allow the folding of the unfolding portion 3a within the maximum transport width "D" of three metres. Figure 5 shows the frame 1 in its folded transport position with the portions 3a retracted.

As commented in the description of the invention, the chassis is floating and has height regulation means to control the sowing depth with greater accuracy.

To achieve said floating effect, each one of the chassis 2a, 2b of the frame 1 is articulately joined to a subframe through two parallelogram mechanisms 11 each one including a first connecting rod 12 joined by one end to said subframe and by its other end to an arm 3 of the front part of the chassis 2 and a second connecting rod 13 joined by one end to said subframe and by its end to an arm 3 of the rear part of the same chassis 2a,2b.

Figure 4 shows a side view of the frame 1 wherein said parallelogram mechanism 11 of one of the chassis 2b is observed.

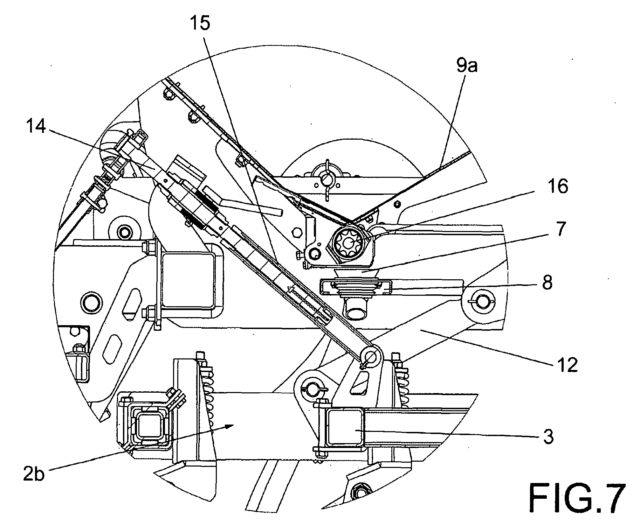

To regulate the height of the floating chassis , a worm 14 has been provided which is joined to a tie rod 15 of the chassis 2a,2b. As figure 7 shows in detail, this tie rod 15 is articulately joined to the chassis 2a,2b, allowing that, on threading the worm 14, the floating chassis rises actuated by the tie rod 15.

Thanks to the frame 1 of the present invention, a cereal seeder is obtained of light construction which makes it possible to sow the largest number of rows per run, it is very simple and versatile and allows a very accurate control of sowing depth.

Despite the fact that reference has been made to a specific embodiment of the invention, it is evident for a person skilled in the art that numerous variations and modifications can be introduced in the frame described, and that all the details mentioned can be replaced by other technically equivalent ones, without departing from the scope of protection defined by the attached claims.

## Claims

1. Frame (1) for a cereal seeder of the type of those where the seeds are distributed from the hopper (9) to the furrow by gravity, comprising a chassis (2a,2b) provided with a plurality of sowing elements (4) of said seeder, said chassis (2a,2b) comprising a plurality of support arms (3) of said sowing elements (4), said support arm (3) being disposed substantially parallel in a same horizontal plane, each sowing element (4) of said support arms (3) determining a sowing line of said seeder, **characterized in that** said arms (3) comprise at least one telescopic portion (3a) susceptible of being horizontally extended from a transport position to an expanded working position and **in that** said frame (1) includes at least one fluid-dynamic cylinder (5) to actuate the telescopic portion (3a).

2. Frame (1) according to claim 1, wherein said chassis (2a,2b) comprises at least four support arms (3) of said sowing elements (4) disposed substantially parallel in a same horizontal plane, each one of said four arms (3) including at least one portion (3a) susceptible of being horizontally extended.

3. Frame (1) according to any of claims 1 to 2, comprising at least two support chassis (2a,2b) of the sowing elements (4) of the seeder which are disposed longitudinally aligned, the free end of the arms (3) of each one of said two chassis (2a,2b) including at least one portion (3a) susceptible of being horizontally extended.

4. Frame (1) according to claim 3, wherein the arms (3) of said chassis (2a,2b) determine, in an extended position, a working width equal to or greater than 4 m.

5. Frame (1) according to any of claims 2 to 4, comprising first seed dispensing means (6,7,8) disposed to feed the arms (3) of the front part of said chassis (2a, 2b) and second seed dispensing means (6,7,8) disposed to feed the arms (3) of the rear part of the same chassis (2a,2b).

6. Frame (1) according to claim 5, wherein said first dispensing means (6,7,8) are associated to a first seed dispensing hopper (9a) of said seeder and said second dispensing means (6,7,8) are associated to a second seed dispensing (9b) hopper of the same seeder.

7. Frame (1) according to claim 6, wherein each one of said first or second dispensing means include a nozzle (7) bar (8) and conduits (6) to channel the seeds from the nozzles (7) of said bar (8) to the sowing elements (4) of the arms (3).

8. Frame (1) according to claim 1, wherein said chassis (2a,2b) is articulately joined to a subframe through a parallelogram mechanism (11) comprising a first connecting rod (12) joined by one end to said subframe and by its other end to an arm (3) of the front part of said chassis (2a,2b) and a second connecting rod (13) joined by one end to said same subframe and by its other end to an arm (3) of the rear part of said chassis (2a,2b).

9. Frame (1) according to claim 8, comprising two chassis (2a,2b) longitudinally aligned and at least one parallelogram mechanism (11) for each one of said chassis (2a,2b).

10. Frame according to claim 8, comprising means to regulate the height of said chassis, said regulation means including a worm (14) which is joined to a tie rod (15) of said chassis (2a,2b).

11. Cereal seeder (10) of the type of those where the seeds are distributed from the hopper (9) to the furrow by gravity, **characterized in that** it includes a frame (1) according to any of preceding claims 1 to 10.

12. Seeder according to claim 11, comprising at least one seed dispensing hopper (9) the length of which is substantially equal to the length of said chassis (2a,2b) or set of two chassis (2a,2b) in their folded transport position.

13. Seeder according to claim 12, comprising two seed dispensing hoppers (9a,9b) each associated to seed dispensing means (6,7,8) of said frame (1).

14. Seeder (10) according to claim 13, wherein said two hoppers (9a,9b) comprise rotation shafts (16) for the dispensing of the seeds which are actuated by a same drive chain which is linked to the drive mechanism of a wheel of said seeder.

## Patentansprüche

1. Rahmen (1) für eine Getreidesämaschine desjenigen Typs, bei dem das Saatgut durch Schwerkraft von dem Fülltrichter (9) an die Furche verteilt wird, wobei der Rahmen ein Chassis (2a, 2b) aufweist, das mit einer Mehrzahl von Säelementen (4) der Sämaschine versehen ist, das Chassis (2a, 2b) eine Mehrzahl von Tragarmen (3) der Säelemente (4) aufweist, die Tragarme (3) im Wesentlichen parallel in einer selben horizontalen Ebene angeordnet sind, wobei jedes Säelement (4) der Tragarme (3) eine Saatreihe der Sämaschine festlegt, **dadurch gekennzeichnet, dass** die Arme (3) zumindest einen Teleskopabschnitt (3a) aufweisen, der horizontal von einer Transportposition zu einer erweiterten Arbeitsposition ausgefahren werden kann, und dass der Rahmen (1) zumindest einen fluiddynamischen Zylinder (7) umfasst, um den Teleskopabschnitt (3a) zu betätigen.

2. Rahmen (1) gemäß Anspruch 1, bei dem das Chassis (2a, 2b) zumindest vier Tragarme (3) der Säelemente (4) umfasst, die im Wesentlichen parallel in einer selben horizontalen Ebene angeordnet sind, wobei jeder der vier Arme (3) zumindest einen Abschnitt (3a) umfasst, der horizontal ausgefahren werden kann.

3. Rahmen (1) gemäß einem der Ansprüche 1 bis 2, der zumindest zwei Tragchassis (2a, 2b) der Säelemente (4) der Sämaschine aufweist, die in Längsrichtung ausgerichtet angeordnet sind, wobei das freie Ende der Arme (3) von jedem der zwei Chassis (2a, 2b) zumindest einen Abschnitt (3a) umfasst, der horizontal ausgefahren werden kann.

4. Rahmen (1) gemäß Anspruch 3, bei dem die Arme (3) des Chassis (2a, 2b) in einer ausgefahrenen Position eine Arbeitsbreite bestimmen, die gleich oder größer als 4 m ist.

5. Rahmen (1) gemäß einem der Ansprüche 2 bis 4, der eine erste Saatgutabgabeeinrichtung (6, 7, 8) aufweist, die angeordnet ist, um die Arme (3) des vorderen Teils des Chassis (2a, 2b) zu versorgen, und eine zweite Saatgutabgabeeinrichtung (6, 7, 8), die angeordnet ist, die Arme (3) des hinteren Teils desselben Chassis (2a, 2b) zu versorgen.

6. Rahmen (1) gemäß Anspruch 5, bei dem die erste Abgabeeinrichtung (6, 7, 8) einem ersten Saatgutabgabefülltrichter (9a) der Sämaschine zugeordnet ist und die zweite Abgabeeinrichtung (6, 7, 8) einem zweiten Saatgutabgabefülltrichter (9b) derselben Sämaschine zugeordnet ist.

7. Rahmen (1) gemäß Anspruch 6, bei dem jede der ersten oder zweiten Abgabeeinrichtung einen Düsen-(7)-Stab (8) und Leitungen (6) umfasst, um das Saatgut von den Düsen (7) des Stabs (8) an die Säelemente (4) der Arme (3) zu leiten.

8. Rahmen (1) gemäß Anspruch 1, bei dem das Chassis (2a, 2b) mit einem Unterrahmen durch einen Parallelogramm-Mechanismus (11) gelenkig verbunden ist, der eine erste Verbindungsstange (12) aufweist, die an einem Ende mit dem Unterrahmen und an dem anderen Ende mit einem Arm (3) des vorderen Teils des Chassis (2a, 2b) verbunden ist, und eine zweite Verbindungsstange (13), die an einem Ende mit demselben Unterrahmen und an dem anderen Ende mit einem Arm (3) des hinteren Teils des Chassis (2a, 2b) verbunden ist.

9. Rahmen (1) gemäß Anspruch 8, der zwei in Längsrichtung ausgerichtete Chassis (2a, 2b) und zumindest einen Parallelogramm-Mechanismus (11) für jedes der Chassis (2a, 2b) aufweist.

10. Rahmen gemäß Anspruch 8, der eine Einrichtung zum Regeln der Höhe des Chassis aufweist, wobei die Regeleinrichtung eine Schnecke (14) umfasst, die mit einer Zugstange (15) des Chassis (2a, 2b) verbunden ist.

11. Getreidesämaschine (10) desjenigen Typs, bei dem das Saatgut durch Schwerkraft von dem Fülltrichter (9) an die Furche verteilt wird, **dadurch gekennzeichnet, dass** dieselbe einen Rahmen (1) gemäß einem der vorhergehenden Ansprüche 1 bis 10 umfasst.

12. Sämaschine gemäß Anspruch 11, die zumindest einen Saatgutabgabefülltrichter (9) aufweist, dessen Länge im Wesentlichen gleich der Länge des Chassis (2a, 2b) oder einem Satz von zwei Chassis (2a, 2b) in deren eingeklappter Transportposition ist.

13. Sämaschine gemäß Anspruch 12, die zwei Saatgutabgabefülltrichter (9a, 9b) aufweist, die jeweils einer Saatgutabgabeeinrichtung (6, 7, 8) des Rahmens (1) zugeordnet ist.

14. Sämaschine (10) gemäß Anspruch 13, bei der die zwei Fülltrichter (9a, 9b) Drehwellen (16) zum Abgeben des Saatguts aufweisen, die durch eine selbe Antriebskette betätigt werden, die mit dem Antriebsmechanismus eines Rads der Sämaschine verknüpft ist.

## Revendications

1. Cadre (1) pour un semoir de céréales du type dont les semences sont distribuées de la trémie (9) au sillon par gravité, comprenant un châssis (2a, 2b) équipé d'une pluralité d'éléments d'ensemencement (4) dudit semoir, ledit châssis (2a, 2b) comprenant une pluralité de bras de support (3) desdits éléments d'ensemencement (4), lesdits bras de support (3) étant disposés de façon sensiblement parallèle dans un même plan horizontal, chaque élément d'ensemencement (4) desdits bras de support (3) déterminant une ligne d'ensemencement dudit semoir, **caractérisé en ce que** lesdits bras (3) comprennent au moins une partie télescopique (3a) susceptible d'être étendue horizontalement à partir d'une position de transport jusqu'à une position de travail déployée et **en ce que** ledit cadre (1) comprend au moins un cylindre à dynamique de fluide (5) pour actionner la partie télescopique (3a).

2. Cadre (1) selon la revendication 1, dans lequel ledit châssis (2a, 2b) comprend au moins quatre bras de support (3) desdits éléments d'ensemencement (4) disposés de façon sensiblement parallèle dans un même plan horizontal chacun desdits quatre bras (3) comprenant au moins une partie (3a) susceptible d'être étendue horizontalement.

3. Cadre (1) selon l'une quelconque des revendications 1 et 2, comprenant au moins deux châssis de support (2a, 2b) des éléments d'ensemencement (4) du semoir qui sont disposés en alignement longitudinal, l'extrémité libre des bras (3) de chacun desdits deux châssis (2a, 2b) comprenant au moins une partie (3a) susceptible d'être étendue horizontalement.

4. Cadre (1) selon la revendication 3, dans lequel les bras (3) desdits châssis (2a, 2b) déterminent, dans une position étendue, une largeur de travail égale ou supérieure à 4 mètres.

5. Cadre (1) selon l'une quelconque des revendications 2 à 4, comprenant des premiers moyens de distribution de semences (6, 7, 8) disposés de manière à alimenter les bras (3) de la partie avant dudit châssis (2a, 2b) et des deuxièmes moyens de distribution de semences (6, 7, 8) disposés de manière à alimenter les bras (3) de la partie arrière du même châssis (2a, 2b).

6. Cadre (1) selon la revendication 5, dans lequel lesdits premiers moyens de distribution (6, 7, 8) sont associés à une première trémie de distribution de semences (9a) dudit semoir et lesdits deuxièmes moyens de distribution (6, 7, 8) sont associés à une deuxième trémie de distribution de semences (9b) du même semoir.

7. Cadre (1) selon la revendication 6, dans lequel chacun desdits premiers et deuxièmes moyens de distribution comprend une buse (7), une barre (8) et des conduits (6) pour canaliser les semences à partir des buses (7) de ladite barre (8) jusqu'aux éléments d'ensemencement (4) des bras (3).

8. Cadre (1) selon la revendication 1, dans lequel ledit châssis (2a, 2b) est joint de façon articulée à un sous-cadre par l'intermédiaire d'un mécanisme de parallélogramme (11) comprenant une première bielle (12) jointe par une première extrémité audit sous-cadre et par son autre extrémité à un bras (3) de la partie avant dudit châssis (2a, 2b), et une deuxième bielle (13) jointe par une première extrémité audit même sous-cadre et par son autre extrémité à un bras (3) de la partie arrière dudit châssis (2a, 2b).

9. Cadre (1) selon la revendication 8, comprenant deux châssis (2a, 2b) alignés de façon longitudinale et au moins un mécanisme de parallélogramme (11) pour chacun desdits châssis (2a, 2b).

10. Cadre (1) selon la revendication 8, comprenant des moyens pour régler la hauteur dudit châssis, lesdits moyens de réglage comprenant une vis sans fin (14) qui est jointe à un tirant de raccordement (15) dudit châssis (2a, 2b).

11. Semoir de céréales (10) du type dont les semences sont distribuées de la trémie (9) au sillon par gravité, **caractérisé en ce qu'**il comprend un cadre (1) selon l'une quelconque des revendications 1 à 10 précédentes.

12. Semoir selon la revendication 11, comprenant au moins une trémie de distribution de semences (9) dont la longueur est sensiblement égale à la longueur dudit châssis (2a, 2b) ou d'un ensemble de deux châssis (2a, 2b) dans leur position de transport repliée.

13. Semoir selon la revendication 12, comprenant deux trémies de distribution de semences (9a, 9b) associées chacune à des moyens de distribution de semences (6, 7, 8) dudit cadre (1).

14. Semoir selon la revendication 13, dans lequel lesdites deux trémies (9a, 9b) comprennent des arbres rotatifs (16) pour distribuer les semences qui sont actionnés par une même chaîne d'entraînement qui est reliée au mécanisme d'entraînement d'une roue dudit semoir.
